# EUROPÄISCHE PATENTSCHRIFT

(11) **EP 0 637 541 B1**
(45) Veröffentlichungstag und Bekanntmachung des Hinweises auf die Patenterteilung: **19.11.1997**
(21) Anmeldenummer: 94111351.6
(22) Anmeldetag: 21.07.1994
(51) Int. Cl.: B64C 3/56, F16B 3/00, F16L 23/036

(54) **Zerlegbarer Flügel für Fluggeräte, insbesondere Flugsportgeräte, und Anordnung zur Herstellung einer formschlüssigen Verbindung von dünnwandigen Hohlprofilen, insbesondere Segmenten derartiger zerlegbarer Flügel**
Decomposable wing and manufacturing system of a connecting element for thin walled shaped piece, in particular for the segments of such decomposable wing
Aile décomposable et système de fabrication d'un élément de connection pour corps profilés à paroi mince, en particulier pour les segments de la dite aile décomposable

(30) Priorität: 04.08.1993 DE 9311643 U
(43) Veröffentlichungstag der Anmeldung: 08.02.1995
(73) Patentinhaber: Katz, Johannes, D-91126 Schwabach (DE)
(72) Erfinder: Katz, Johannes, D-91126 Schwabach (DE)
(74) Vertreter: Rau, Manfred, Dr. Dipl.-Ing.

(56) Entgegenhaltungen:
- DE-A- 3 028 609
- FR-A- 1 462 186
- US-A- 2 743 072

## Beschreibung

Die Erfindung richtet sich auf zerlegbare Flügel für Fluggeräte, insbesondere Flugsportgeräte, die vorzugweise eine Anordnung zur Herstellung einer formschlüssigen Verbindung von dünnwandigen Hohlprofilen aufweisen. Es gibt zwei grundsätzliche Arten von Flugsportgeräten, wie sie im Rahmen der vorliegenden Anmeldung insbesondere als potentielle Anwendungsfälle in Betracht kommen.

Zum einen gibt es zerlegbare Fluggeräte, die als Hängegleiter bezeichnet werden und den Vorteil aufweisen, daß sie sich bis zu einem relativ kleinen Volumen zerlegen lassen. Diese Hängegleiter bestehen aus drei Basiskonstruktionselementen, nämlich aus zwei Flügelrohren, welche mit einem Kielrohr verbunden sind und zum Aufspannen des deltaförmigen Segels dienen. Die Spannung des Segels wird entweder über ein Querrohr oder über Seile vom Nasenspann aus hergestellt und aufrechterhalten. Darüber hinaus können zusätzliche Verspannungen und Abstützungen vorgesehen sein.

Der Nachteil dieser an sich einfachen Konstruktionen besteht darin, daß mit ihnen in der Regel kein wünschenswert flacher Gleitwinkel erzielt werden kann.

Um insoweit eine Verbesserung der Gleitleistung zu erreichen, sind verschiedene Anstrengungen unternommen worden, beispielweise die Abkehr von der reinen Deltaform zu einem gepfeilten Flügel, der Einbau von profilformgebenden Segellatten, die Verwendung von Doppelsegeln sowie Zusatzabspannungen zur Erzeugung der erforderlichen Flügelschränkung.

Trotz dieser Neuerungen wurde der prinzipielle Mechanismus des Aufbaus bzw. Zusammenbaus beibehalten wobei Aufbau und Zusammenbau sich um so aufwendiger gestalten, je mehr der vorstehend angeführten Zusatzmaßnahmen zur Erhöhung des Gleitwinkels realisiert werden. Dementsprechend geht eine Verbesserung der Flugleistungen also einher mit einer drastischen Erhöhung des Aufwandes bei der Montage und Demontage.

Als Alternative zu derartigen relativ aufwendig handzuhabenden Fluggeräten haben sich deshalb Gleitschirme durchgesetzt, welche keine festen Rohrgestelle aufweisen und sich dementsprechend sehr schnell bei geringem Packmaß flugfertig machen lassen.

Demgegenüber haben diese Gleitschirme wieder den Nachteil, daß sie eine niedrigere Eigengeschwindigkeit aufweisen und spürbar schlechtere Gleitleistungen.

In Abkehr von diesen beiden grundsätzlichen Arten von Fluggeräten gibt es auch schon eine Entwicklungsrichtung, welche flugzeugähnliche Konstruktionen mit Starrflügeln einsetzt, um so Gleitzahlen über 20 realisieren zu können. So sehr diese Konstruktionen hinsichtlich des Gleitverhaltens grundsätzlich zu überzeugen vermögen, so wenig sind sie für die Anwendung im Sport akzeptabel, weil der Transport und der Aufbauaufwand derzeit noch viel zu hoch ist.

Hiervon ausgehend liegt der Erfindung die Aufgabe zugrunde, ein Fluggerät der eingangs genannten Art so auszugestalten, daß es den Leistungen eines Segelflugzeuges einerseits sehr nahekommt und andererseits ein möglichst geringes Gewicht und Packmaß aufweist, um tragbar, fuß-start- und -landefähig und im Auto und im Sessellift oder dergleichen transportfähig zu sein, wobei gleichzeitig ein schneller Auf- und Abbau gewährleistet sein soll.

Diese Aufgabe wird erfindungsgemäß dadurch gelöst, daß der Flügel aus einer Mehrzahl von Segmenten besteht, welche miteinander verbindbar, innen hohl und derart dimensioniert sind, daß jedes einzelne Segment sich im Querschnitt zur Flügelaußenseite verjüngt, wobei jedoch die aneinander anliegenden Querschnitte benachbarter Segmente etwa gleichgroß sind, so daß das jeweils nächstkleinere Segment in das vorhergehende größere Segment einschiebbar ist.

Durch diese Ausgestaltung wird erreicht, daß es einerseits möglich ist, Flügel zu schaffen, welche den aerodynamischen Eigenschaften der Flügel von Segelfliegern sehr nahekommen, die sich aber andererseits vergleichsweise bequem transportieren lassen, indem sie auf engsten Raum zusammengeschoben werden können, so daß sie beispielsweise im Kofferraum von Kraftfahrzeugen, auf Dachgepäckständern oder kleinen Lastenanhängern transportiert werden können und auch in Bergbahnen und dergleichen mitgenommen werden können.

Anzumerken ist, daß soweit im Rahmen dieser Anmeldung von Flügeln die Rede ist, damit auch Flügelabschnitte oder Holme gemeint sind, im Zusammenhang mit welchen sich der erfindungsgemäße Grundgedanke ebenfalls realisieren läßt.

In weiterer Ausgestaltung der Erfindung kann vorgesehen sein, daß wenigstens ein Teil der Segmente zusätzlich in Richtung etwa parallel zur Flügellängsachse teilbar ist. Diese Maßnahme kommt für die innenliegenden, größeren Segmente in Betracht.

Vorzugsweise ist vorgesehen, daß jedes Segment als selbsttragendes Schalenelement ausgebildet ist. Dementsprechend kann jedes Segment an der Innenseite frei von Verstrebungen ausgebildet werden, welche dem Ineinanderschieben entgegenstehen würden. Gegebenenfalls können lösbare Verstrebungen erforderlich sein.

In weiterer Ausgestaltung der kann eine Anordnung zur formschlüssigen Verbindung von insbesondere dünnwandigen Hohlprofilsegmenten senkrecht zur Längserstreckung der Segmente vorgesehen sein. Eine solche Anordnung zeichnet sich aus durch einen im Bereich der Stirnseite der Segmente angeordneten, sich wenigstens abschnittsweise um den Außenrand der Stirnseiten erstreckenden, von der Oberfläche der Segmente radial abstehenden, flanschartigen Vorsprung, der so ausgebildet ist, daß er im Bereich der Stirnseite formschlüssig an einem korrespondierenden Vorsprung des jeweils benachbarten Segments anliegt und im Bereich, der der Stirnseite abgewandt ist, ihm eine Hinterschneidung derart zugeordnet ist, daß ein klammerartiges Verbindungselement in Längsrichtung der Vorsprünge von einem End- oder Unterbrechungsbereich der Vorsprünge her so aufschiebbar ist, daß korrespondierende beiderseitige Ansätze des Klammerelements in der Hinterschneidungen eingreifen.

Diese Konstruktion stellt eine grundsätzliche Abkehr von bekannten Ausführungsformen dar, wo man jeweils versucht hat, durch im Inneren der Profile angeordnete Verstrebungen od.dgl. eine eigensteife Konstruktion zu erzielen.

In weiterer Ausgestaltung der Erfindung kann vorgesehen sein, daß das Klammerelement in Längsrichtung derart eigenelastisch ist, daß es beim Aufschieben der Krümmung der Stirnflächen der zu verbindenen Segmente folgen kann und dabei gleichzeitig verspannt wird. Es wird also über eine reine formschlüssige Verbindung hinaus durch das Verbiegen der Klammerelemente und die dadurch entstehende elastische Spannung eine zusätzliche Vorspannung erzielt.

Günstigerweise kann vorgesehen sein, daß eine Mehrzahl von Klammerelementen von einer Querschnittsprofil-Außenseite her reißverschlußartig aufgeschoben sind. Dementsprechend muß nicht jedes einzelne Klammerelement die volle Elastizität aufweisen, um gegebenenfalls stark gekrümmten Profilabschnitten folgen zu können. Grundsätzlich wäre es denkbar, im Bereich starker Krümmungen kürzere Klammerelemente und im Bereich schwacher Krümmungen längere Klammerelemente vorzusehen. Natürlich können auch alle Klammerelemente gleich dimensioniert werden, wobei die Länge dann so vorgegeben sein muß, daß jedes Klammerelement der maximalen Krümmung folgen kann.

Die Vorsprünge können gemäß einer bevorzugten Ausgestaltung Unterbrechungen aufweisen, deren Länge mindestens der Länge der Klammerelemente entspricht, so daß diese dort aufgesetzt und auf die Vorsprünge aufgeschoben werden können. Durch diese Maßnahme ist es nicht erforderlich, daß die Klammerelemente jeweils vom äußersten Ende her über die ganze Länge der Vorsprünge aufgeschoben werden.

Eine weitere vorteilhafte Ausgestaltungsform sieht vor, daß die Vorsprünge sich in deren Längsrichtung spitzwinklig verbreitern und/oder verdicken und die Klammerelemente sich entsprechend spitzwinklig verschmälern und/oder verjüngen, so daß beim Aufschieben der Klammerelemente eine Verkeilung entsteht. Diese Verkeilung kann anstelle der Sicherung durch das Verbiegen der Klammerelemente oder zusätzlich hierzu zur Erhöhung der Vorspannung der Verbindung dienen.

Ebenfalls im Sinne einer Festigkeitserhöhung kann vorgesehen sein, daß die Stirnseiten der Vorsprünge derart profiliert sind, daß die Stirnseiten benachbarter Vorsprünge formschlüssig ineinander greifen.

Um sicherzustellen, daß die durch die Klammerelemente hergestellte Verbindung zwischen den einzelnen Segmenten sich auch bei starker bzw. lang anhaltender Kraftbeaufschlagung nicht selbsttätig lösen kann, können Spannvorrichtungen und/oder Sicherungselemente zum Festlegen oder Verspannen der Klammerelemente in Längsrichtung der Vorsprünge und/oder zum Verspannen der formschlüssig miteinander verbundenen Segmente in Richtung von deren Längsachse vorgesehen sein. Beispielsweise kann ein Sicherungselement in Form einer senkrecht eingebrachten Schraube an der jeweils letzten Klammer angebracht werden, um auf diese Weise zu verhindern, daß die einzelnen Segmente sich unbeabsichtigt voneinander lösen.

Die Hinterschneidung, die jedem Vorsprung zugeordnet ist, muß nicht notwendigerweise an diesem selbst ausgebildet sein, sondern kann bei einer möglichen Variante auch im Abstand zu dem Vorsprung in dem Flügel-Segment ausgebildet sein.

Bei einer weiteren Ausführungsform ist vorgesehen, daß die Hinterschneidungen unterhalb der Oberfläche der Segmente ausgebildet sind. Dementsprechend können die Oberflächen der Segmente bündig aneinander anliegen. Die Klammerelemente werden dann durch Öffnungen in die Hinterschneidungen eingeschoben. Diese Ausgestaltung hat den Vorteil, daß die aerodynamischen Eigenschaften durch die Verbindungstechnik wenig beeinflußt werden.

Nachfolgend wird die Erfindung anhand bevorzugter Ausführungsbeispiele in Verbindung mit der Zeichnung näher erläutert. Dabei zeigen:
- Fig. 1: eine schematische Aufsicht auf die zerlegbaren Flügel für ein Flugsportgerät, wobei die beiden Flügelhälften unterschiedlich ausgestaltet sind,
- Fig. 2 bzw. 3: schematische Darstellungen zur Veranschaulichung, wie die Segmente der rechten bzw. linken Flügelhälfte gemäß Fig 1 ineinander verschiebbar sind,
- Fig. 4: einen Schnitt durch den Verbindungsbereich zweier Segmente der Flügel eines Flugsportgerätes gemäß einer ersten Ausführungsform,
- Fig. 5: eine Fig. 4 entsprechende Darstellung einer weiteren Ausführungsform,
- Fig. 6: eine ausschnittsweise perspektivische Darstellung der Ausführungsform nach Fig. 5,
- Fig. 7: eine Fig. 4 entsprechende Darstellung einer weiteren Ausführungsform und
- Fig. 8: eine Aufsicht auf eine weitere Variante.

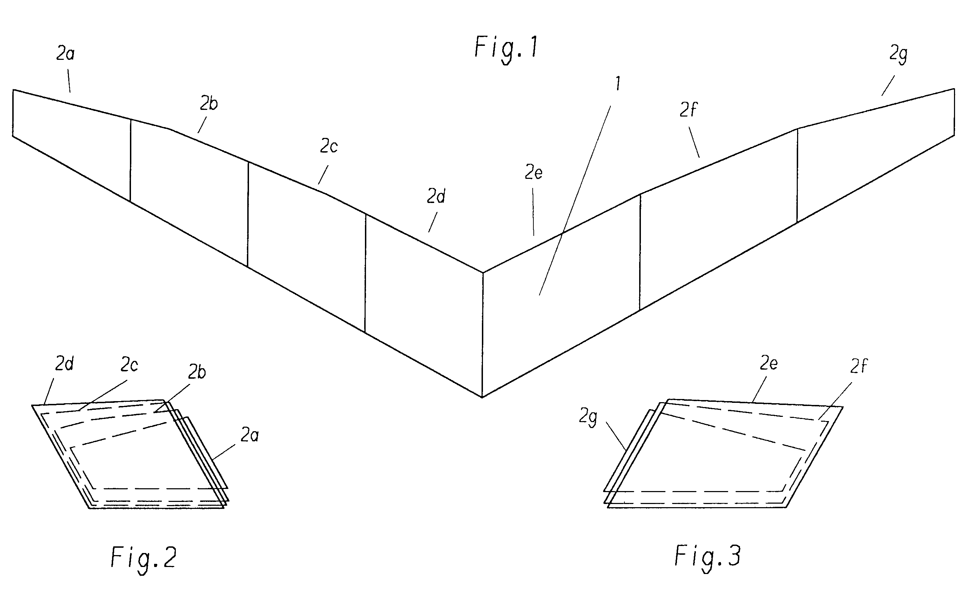

In Fig. 1 ist ein lediglich aus Gründen der Veranschaulichung asymmetrisch dargestellter Flügel 1 eines Flugsportgerätes schematisch dargestellt. Der Flügel 1 ist aus einzelnen Segmenten 2 aufgebaut. Das in Fig. 1 links dargestellte Ausführungsbeispiel aus vier Segmenten 2a bis 2d und das rechts in Fig. 1 dargestellte Ausführungsbeispiel aus drei Segmenten 2e bis 2g.

Die einzelnen Segmente 2 sind so dimensioniert, daß sie sich zum Transport und zur Aufbewahrung ineinanderschieben lassen, wie dies in Fig. 2 und 3 dargestellt ist. Das größte Segment 2d bildet praktisch die äußere Hülle, wobei dann die Segmente 2c und 2b und zuletzt das kleinste Segment 2a eingeschoben sind.

Entsprechend bildet in Fig. 3 das größte Segment 2e die äußere Hülle, in die dann das nächstkleinere Segment 2f und das kleinste Segment 2g eingeschoben sind.

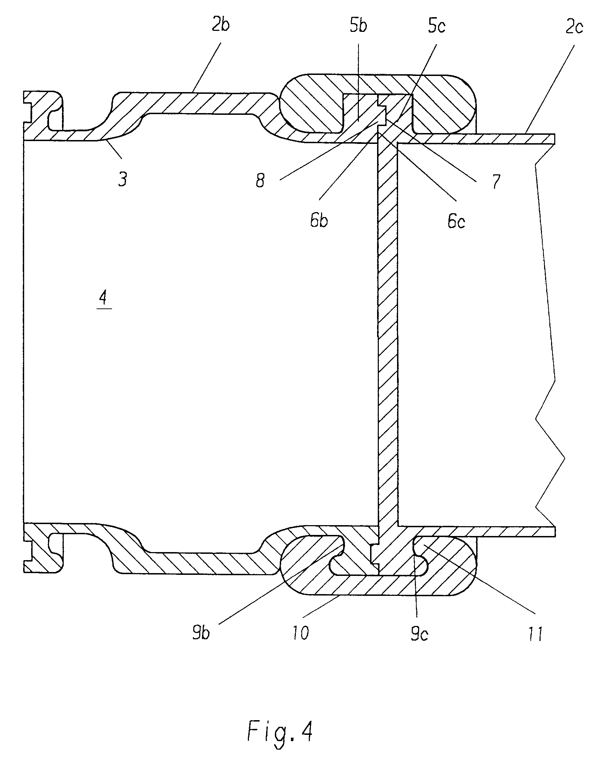

Fig. 4 zeigt den Verbindungsbereich zweier aneinander angrenzende Segmente 2, z.B. der Elemente 2b, 2c, welche jeweils aus einer Außenwand 3 und einem inneren Hohlraum 4 bestehen. Im Bereich ihrer Stirnflächen sind umlaufende Vorsprünge 5, beispielsweise die Vorsprünge 5b und 5c vorgesehen. Zur Veranschaulichung verschiedener möglicher Gestaltungsformen ist in Fig. 4 eine Kombination verschiedener Querschnittsprofile dieser Vorsprünge dargestellt. Eine Besonderheit liegt bei der Ausführungsform nach Fig. 4 darin, daß die Stirnseiten, also beispielsweise die Stirnseite 6c und 6b, Ausnehmungen 7 bzw. Vorsprünge 8 aufweisen, die formschlüssig ineinandergreifen.

Wie in Fig. 4 unten dargestellt, weisen die Vorsprünge 5 Hinterschneidungen, also z.B. 9b, 9c, auf. Auf die umlaufenden Vorsprünge 5 sind Klammerelemente 10 aufgeschoben, die die benachbarten Vorsprünge 5b, 5c übergreifen und umgreifen, in dem sie mit Vorsprüngen 11 in die Hinterschneidungen, also z.B. die Hinterschneidungen 9b, 9c eingreifen.

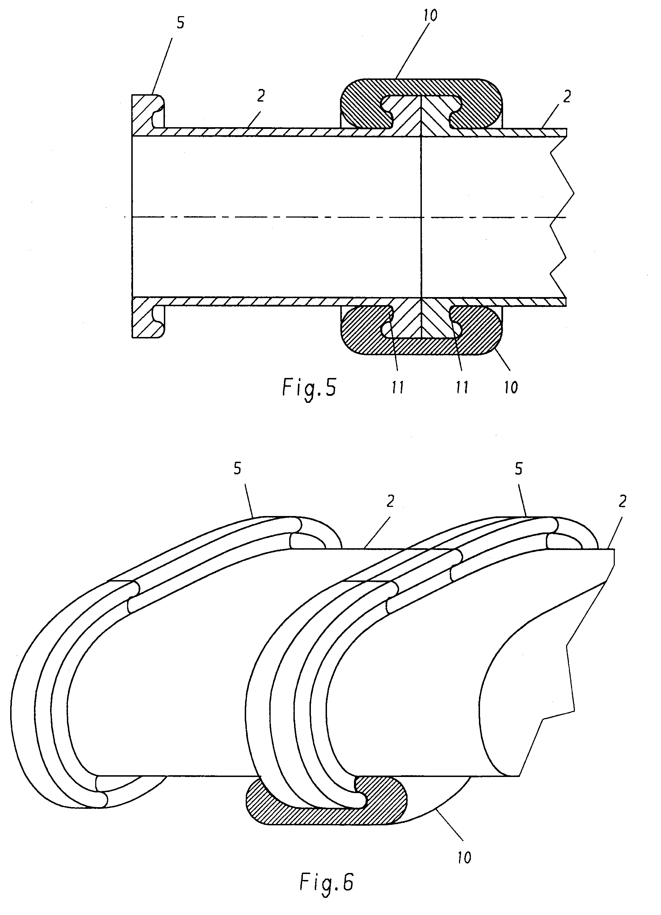

In Fig. 5 und 6 ist im Schnitt bzw. perspektivisch eine Variante dargestellt, bei der die Stirnseiten der Vorsprünge 5 flächig-eben aneinander liegen und die Klammerelemente 10 etwa C-förmig ausgebildet sind.

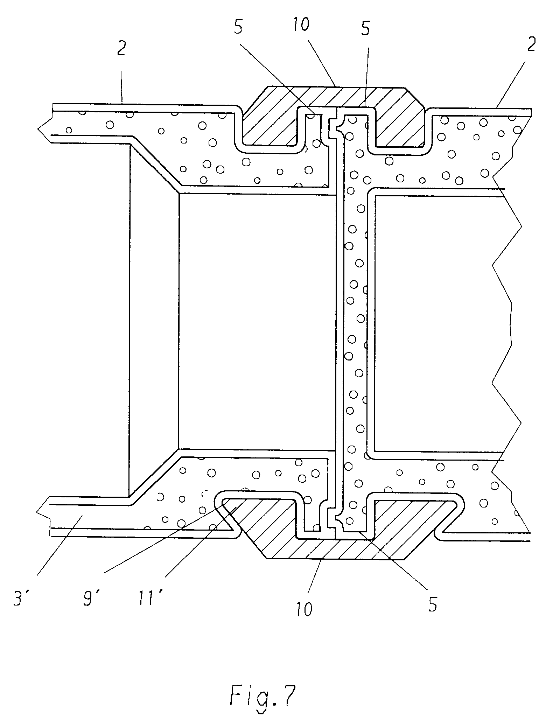

Bei der in Fig. 7 dargestellten Ausführungsform ist eine Hinterschneidung 9', die von einem Vorsprung 11' des Klammerelements 10 hintergriffen wird, in der Wand 3' des jeweiligen Flügelsegments 2 im Abstand zu dem jeweiligen Vorsprung 5 ausgebildet.

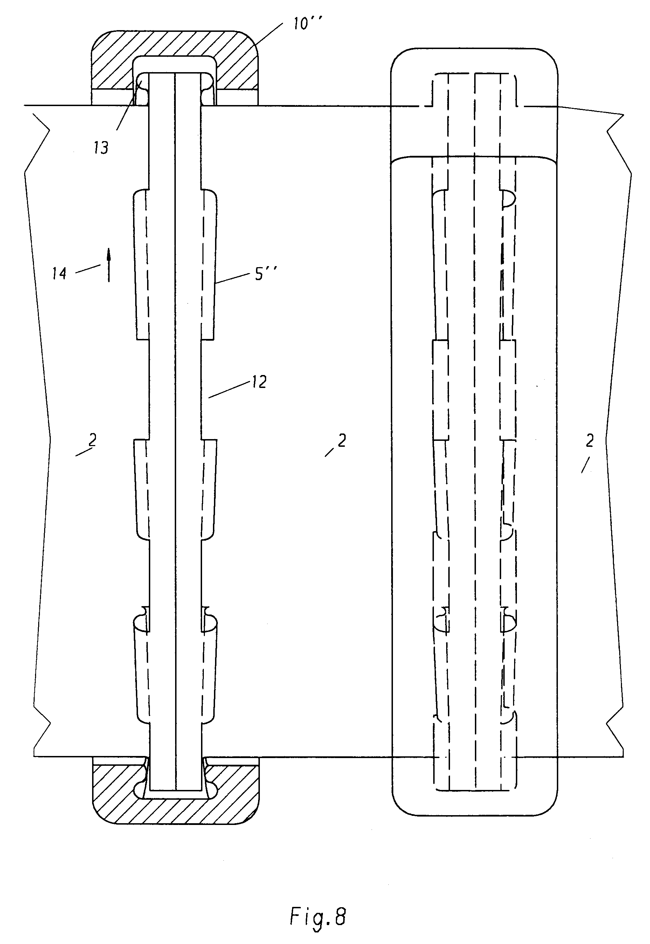

Bei der in Fig. 8 dargestellten Ausführungsform sind die Vorsprünge 5'' so ausgebildet, daß sie sich spitzwinklig verbreitern. Zwischen den einzelnen Abschnitten der Vorsprünge 5'' sind Zwischenräume 12 vorgesehen, die etwas länger sind als die verwendeten Klammerelemente 10'', so daß die Klammerelemente 10'' in diesem Bereich aufgesetzt werden können Die Klammerelemente weisen Hinterschneidungen 13 auf, die entsprechend spitzwinklig zulaufen, so daß bei einem Aufschieben in Richtung des Pfeils 14 eine Verkeilung und damit eine Sicherung auftritt.

## Patentansprüche

1. Zerlegbarer Flügel für Fluggeräte, insbesondere Flugsportgeräte, **dadurch gekennzeichnet, daß** der Flügel aus einer Mehrzahl von Segmenten (2) besteht, welche miteinander verbindbar, innen hohl und derart dimensioniert sind, daß jedes einzelne Segment sich im Querschnitt zur Flügelaußenseite verjüngt, wobei jedoch die aneinander anliegenden Querschnitte benachbarter Segmente etwa gleich groß sind, so daß das jeweils nächstkleinere Segment (2) in das vorhergehende größere Segment (2) einschiebbar ist.

2. Flügel nach Anspruch 1, **dadurch gekennzeichnet, daß** wenigstens ein Teil der Segmente (2) zusätzlich in Richtung etwa parallel zur Flügellängsachse teilbar ist.

3. Flügel nach Anspruch 1, **dadurch gekennzeichnet, daß** jedes Segment (2) als selbsttragendes Schalenelement ausgebildet ist.

4. Flügel nach Anspruch 1 mit einer Anordnung zur formschlüssigen Verbindung von insbesondere dünnwandigen Hohlprofilsegmenten senkrecht zur Längserstreckung der Segmente, **gekennzeichnet durch** einen im Bereich jeder Stirnseite der Segmente angeordneten, sich wenigstens abschnittsweise um den Außenrand der Stirnseiten erstreckenden, von der Oberflache der Segmente radial abstehenden flanschartigen Vorsprung (5), der so ausgebildet ist, daß er im Bereich der Stirnseite formschlüssig an einem korrspondierenden Vorsprung (5) des jeweils benachbarten Segments (2) anliegt und ihn im Bereich, der der Stirnseite abgewandt ist, eine Hinterschneidung (9') derart zugeordnet ist, daß ein Klammerelement (10) in Längsrichtung der Vorsprünge (5) von einem End- oder Unterbrechungsbereich der Vorsprünge (5) her so aufschiebbar ist, daß korrespondierende beiderseitige Ansätze (11) des Klammerelements (10) in die Hinterschneidungen eingreifen.

5. Flügel nach Anspruch 4, **dadurch gekennzeichnet, daß** das Klammerelement (5) in Längsrichtung derart eigenelastisch ist, daß es beim Aufschieben der Krümmung der Stirnflächen der zu verbindenden Segmente (2) folgen kann und dabei gleichzeitig verspannt wird.

6. Flügel nach Anspruch 4, **dadurch gekennzeichnet, daß** eine Mehrzahl von Klammerelementen von einer Querschnittsprofil-Außenseite her reißverschlußartig aufgeschoben ist.

7. Flügel nach Anspruch 4, **dadurch gekennzeichnet, daß** die Vorsprünge (5'') Unterbrechungen (12) aufweisen, deren Länge mindestens der Länge der Klammerelemente (10'') entspricht, so daß diese dort aufgesetzt und auf die Vorsprünge (5'') aufgeschoben werden können.

8. Flügel nach den Ansprüchen 4 und 7, **dadurch gekennzeichnet, daß** die Vorsprünge (5'') sich in deren Längsrichtung spitzwinklig verbreitern und/oder verdicken und die Klammerelemente (10'') sich entsprechend spitzwinklig verschmälern und/oder verjüngen, so daß beim Aufschieben der Klammerelemente (10'') eine Verkeilung entsteht.

9. Flügel nach Anspruch 4, **dadurch gekennzeichnet, daß** die Stirnseiten der Vorsprünge (5) derart profiliert sind, daß die Stirnseiten benachbarter Vorsprünge (5b,5c) formschlüssig ineinander greifen.

10. Flügel nach Anspruch 4, **dadurch gekennzeichnet, daß** Spannvorrichtungen zum Verspannen der Klammerelemente (10) in Längsrichtung der Vorsprünge (5) und/oder zum Verspannen der formschlüssig miteinander verbundenen Segmente (2) in Richtung von deren Längsachse vorgesehen sind.

11. Flügel nach Anspruch 4, **dadurch gekennzeichnet, daß** die Hinterschneidung (9') im Abstand zu dem Vorsprung (5) in dem Flügel-Segment (2) ausgebildet ist.

12. Flügel nach Anspruch 4, **dadurch gekennzeichnet, daß** die Hinterschneidungen unterhalb der Oberfläche der zu verbindenden Segmente (2) ausgebildet sind und die Segmentoberflächen im wesentlichen bündig aneinander anstoßen, wobei die Klammerelemente (10) durch Öffnungen einschiebbar sind.

## Claims

1. A dismountable wing for aviation equipments, in particular sport flying equipments, **characterized in that** the wing consists of a plurality of segments (2) which are unitable, hollow inside and dimensioned such that each individual segment tapers in cross-sectional area towards the tip of the wing, the adjoining cross-sectional areas of adjacent segments being however of about the same size so that the segment (2) coming next in size can be inserted into the preceding greater segment (2).

2. A wing according to claim 1, **characterized in that** at least part of the segments (2) are additionally separable in a direction approximately parallel to the longitudinal axis of the wing.

3. A wing according to claim 1, **characterized in that** each segment (2) is a self-supporting shell element.

4. A wing according to claim 1, comprising an arrangement for the positive union of in particular of segments of thin-walled hollows at right angles to the longitudinal extension of the segments, **characterized by** a flangelike projection (5) disposed in the vicinity of each face of the segments and extending at least in sections around the outside edge of the faces and radially projecting from the surface of the segments, the projection (5) being such that in the vicinity of the face, it bears positively against a corresponding projection (5) of the respectively adjacent segment (2) and that it is assigned a rear recess (9') where turned away from the face such that a clamp (10) is slippable in the longitudinal direction of the projections (5) from an end or an interspace of the projections (5) in such a way that corresponding lugs (11) on either side of the clamp (10) engage with the rear recesses.

5. A wing according to claim 4, **characterized in that** the clamp (5) is inherently elastic in the longitudinal direction such that when slipped on, it can trace the curvature of the faces of the segments (2) to be united and is simultaneously clamped.

6. A wing according to claim 4, **characterized in that** a plurality of clamps is slipped on in a zipper-like manner from one outside of the cross-sectional profile.

7. A wing according to claim 4, **characterized in that** the projections (5'') have interspaces (12), of which the length corresponds at least to the length of the clamps (10''), so that the latter can be placed where an interspace (12) is provided and be slipped on to the projections (5'').

8. A wing according to claims 4 and 7, **characterized in that** the projections (5'') widen and/or thicken by an acute angle in their longitudinal direction and that the clamps (10'') narrow and/or taper correspondingly by an acute angle, which results in wedging when the clamps (10'') are slipped on.

9. A wing according to claim 4, **characterized in that** the faces of the projections (5) are profiled such that the faces of adjacent projections (5, 5c) mesh positively.

10. A wing according to claim 4, **characterized in that** the clamping devices for arresting the clamps (10) in the longitudinal direction of the projections (5) and/or for clamping the positively united segments (2) are provided in the direction of the latter's longitudinal axis.

11. A wing according to claim 4, **characterized in that** the rear recess (9') is formed on the wing segment (2) at a distance from the projections (5).

12. A wing according to claim 4, **characterized in that** the rear recesses are formed below the surface of the segments (2) to be united and that the segment surfaces adjoin substantially flush, the clamps (10) being insertable through openings.

## Revendications

1. Aile démontable pour engins volants, en particulier pour des appareils de transport aérien, caractérisée en ce que l'aile est constituée d'une pluralité de segments (2) qui peuvent être raccordés entre eux, sont creux à l'intérieur et dimensionnés de telle sorte que chaque segment individuel va en s'amincissant dans la section transversale en direction du côté extérieur de l'aile, les sections transversales contiguës de segments avoisinants étant toutefois de même dimension de façon à permettre à chaque fois d'introduire par coulissement le segment suivant plus petit (2) dans le segment précédent plus grand (2).

2. Aile selon la revendication 1, caractérisée en ce qu'au moins une partie des segments (2) est également séparable dans la direction sensiblement parallèle à l'axe longitudinal de l'aile.

3. Aile selon la revendication 1, caractérisée en ce que chaque segment (2) est conçu sous forme d'élément de coque auto-porteur.

4. Aile selon la revendication 1, avec un agencement permettant une liaison par engagement positif de segments de profil creux à parois particulièrement minces perpendiculairement à l'extension longitudinale des segments, caractérisée par une saillie en forme de collerette au niveau de chaque côté frontal des segments, s'étendant au moins par section autour du bord extérieur des côtés avant, se détachant radialement de la surface des segments, saillie (5) conçue de telle sorte qu'au niveau du côté avant, elle repose en engagement positif sur une saillie correspondante (5) du segment respectivement avoisinant (2) à laquelle est affectée une contre-dépouille (9') dans la zone détournée du côté frontal de telle sorte qu'un élément de retenue (10) peut être enfiché dans la direction longitudinale des saillies (5) à partir d'une zone d'extrémité ou zone d'interruption des saillies (5) de façon à s'engager dans des appendices bilatéraux (11) correspondants de l'élément de retenue (10) dans les contre-dépouilles.

5. Aile selon la revendication 4, caractérisée en ce que l'élément de retenue (5) présente une élasticité propre lui permettant, lors de l'enfichage, d'épouser la courbure des faces avant des segments (2) à relier et d'être simultanément fixé.

6. Aile selon la revendication 4, caractérisée en ce qu'une pluralité d'éléments de retenue est enfichée à partir d'un côté extérieur du profit de section transversale à la manière d'une fermeture à glissière.

7. Aile selon la revendication 4, caractérisée en ce que les saillies (5'') présentent des interruptions (12) dont la longueur correspond au moins à la longueur des éléments de retenue (10'') de sorte que ceux-ci peuvent être appliqués et enfichés sur les saillies (5'').

8. Aile selon les revendications 4 et 7, caractérisée en ce que les saillies (5'') s'élargissent en angle de pointe et/ou s'épaississent dans leur direction longitudinale et les éléments de retenue (10'') vont en se rétrécissant et/ou en s'amenuisant en angle de pointe de façon correspondante afin de produire un calage lors de l'enfichage des éléments de retenue (10'').

9. Aile selon la revendication 4, caractérisée en ce que les côtés avant des saillies (5) sont profilés de telle sorte que les côtés avant de saillies avoisinantes (5b, 5c) coopèrent entre eux par engagement positif.

10. Aile selon la revendication 4, caractérisée en ce que les dispositifs tendeurs destinés à tendre les éléments de retenue (10) dans la direction longitudinale des saillies (5) et/ou à tendre les segments (2) raccordés entre eux en liaison par engagement positif sont prévus dans la direction de leur axe longitudinal.

11. Aile selon la revendication 4, caracterisée en ce que la contre-dépouille (9') est conçue à une certaine distance de la saillie (5) dans le segment d'aile (2).

12. Aile selon la revendication 4, caractérisée en ce que les contre-dépouilles se situent au-dessous de la surface des segments (2) à raccorder et les surfaces de segments sont aboutées sensiblement en affleurement, les éléments de retenue (10) pouvant être enfichés par les ouvertures.
